# EUROPEAN PATENT SPECIFICATION

(11) **EP 4 413 250 B1**
(45) Date of publication and mention of the grant of the patent: **10.12.2025**
(21) Application number: 22830288.1
(22) Date of filing: 06.10.2022
(51) Int. Cl.: F03B 1/00

(54) **DUAL PROPELLER TURBINE**
DOPPELPROPELLERTURBINE
TURBINE À DOUBLE HÉLICE

(30) Priority: 07.10.2021 GE AP2021015751
(43) Date of publication of application: 14.08.2024
(73) Proprietor: JSC ZAGO TECHNOLOGY, 0108 Tbilisi (GE)
(72) Inventor: ZAGORUICHENKO, Viacheslav, 0103 Tbilisi (GE)
(74) Representative: Modiano, Gabriella Diana
(86) International application number: PCT/GE2022/050005
(87) International publication number: WO 2023/057779

(56) References cited:
- GE-B- P20 156 272
- RU-U1- 46 816
- US-A1- 2014 341 709
- US-A1- 2020 025 180

## Description

The present invention pertains to the hydraulic power industry and it can be used to convert water energy into rotary mechanical energy of a shaft, and then to convert it into electrical energy.

Turbines provided with ladles are known, which belong to the category of active turbines. In such turbines, water enters in the form of a jet and is delivered to ladles mounted on the rim of a blade wheel. The tangential component of the jet velocity on the ladles changes direction by 180 degrees, resulting in a force acting on each ladle that causes the turbine to rotate.

A propeller hydroturbine is known, which is disclosed in the Georgian patent GE P 2015 6272 B. The turbine has all the advantages of turbines with ladles, and, on the other hand, for the same power, it has a relatively high speed, reduced overall dimensions and a relatively high efficiency at low pressure, which significantly extends the scope of its use.

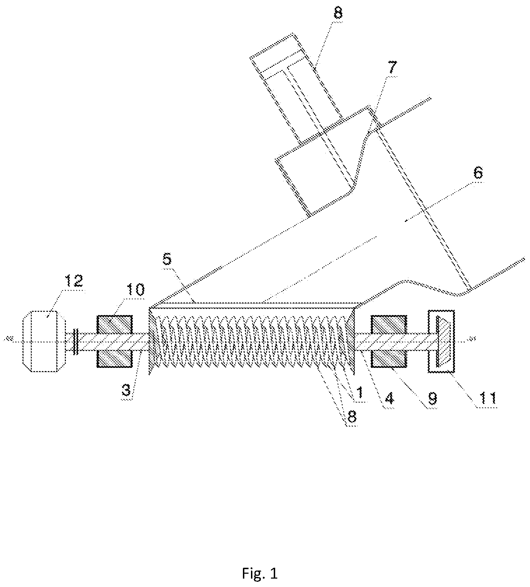

Fig. 1 shows a general view of the above mentioned turbine. The turbine comprises: one or more spiral blades 1 and 2; two coaxial shafts 3 and 4 with conical flanges welded thereto, the shafts are accomodated in bearings 9 and 10; receiving and distributing chamber 5; jet generating adjustable reducing nozzle 6, which includes a movable upper guide 7; servo motor 8 placed in the nozzle for adjustment. The turbine shaft is connected to ta generator 12. The structure includes two turbine bearings 9 and 10.

An axial bearing 11 is provided to receive the axial force acting on the turbine.

In this turbine, the as in the case of the turbine with ladles, the same idea is used to generate axial force on the blades, in particular, to induce a reaction to the rotation of the tangential component of the jet speed, with the difference that this idea is used for the axial component of the jet speed. The tangential rotating speed of the ladle is replaced here by the fact that the blades are made as a screw, and during their rotation, their surfaces, which interact with the water jet, will be constantly shifted along the axis, which is equivalent to the formation of an axial component of the speed in them.

A torque is generated on the blades when the axial force generated on the inclined surfaces of the spiral blades breaks up. At the outlet of the turbine, the water jet forms a tangential velocity component, which increases the losses at the outlet. In order to reduce these losses, the present invention suggests that the inflowing jet has a certain tangential component, which ensures that, when the blade wheelrotates, it's moment will be subtracted from the moment of the outflowing jet and the losses at the outlet will be reduced. At the same time, it is taken into account that the jet will be affected by centrifugal forces, which will cause the jet to spill over the blade surfaces, and at the edges of the outflowing jet, tangential components of different directions will be formed in the radial section, which will also increase the losses. In order to compensate for such spillage, it is necessary to narrow the jet entering the blade wheel so as to form of a certain arc shape such that the jet has a radial component at all points of the entering arc, which will be directed towards the center. For this purpose, the proposed structureprovides for the passage of the initial jet through the distribution guide chamber, which directs the jet with its guide blades in such a manner that at every point of the entrance arc, the water will have radial and tangential velocity components, the magnitudes of which will be calculated in advance, and at the same time, the absolute magnitudes of the velocity will not change. As a result of a proper calculation, not only small losses can be achieved in the blade wheel, but also a large throughput per unit length of the turbine can be achieved.

Despite the above-mentioned advantages, the known propeller turbine discussed above has a significant drawback. In particular, a significant axial force acts on the propeller turbine, which must be absorbed by the axial bearing.

The axial bearing with a horizontal axis used therein is characterized by the fact that the upper segments are difficult to lubricate and require separate structural solutions. At a big axial load and at higher revolutions, the losses in the axial bearing increase. All this leads to a decrease in the efficiency of the entire unit.

The technical effect of the present invention is increase in the efficiency of the turbine.

The propeller turbine according to the present invention comprises basic spiral blades, basic two coaxial shafts on which the basic spiral blades are mounted, a basic water jet receiving and distributing chamber, and a basic adjustable reducing nozzle for creating the jet, the turbine being characterized in that it further comprises additional spiral blades and two additional co-axial shafts with additional spiral blades mounted thereon; an additional water jet receiving and distributing chamber; and an additional adjustable reducing nozzlegenerating the water jet, a common upstream pipeline and two water flow converter feedingconnected to it at one end; the other ends of which are connected to the basic and additional adjustable reducing nozzles producing the mentioned water jet, and the basic two coaxial shafts and the additional two coaxial shafts are arranged coaxially, and the basic water jet receiving and distributing chamber, thebasic adjustable reducing nozzle, the additional water jet receiving and distributing chamber, and the additional adjustable reducing nozzle are arranged so that the axial forces generated by the water jets on the basic and additional spiral blades are opposite to each other. The basic and additional adjustable reducing nozzleshave a semicircular shape and are provided with water jet cutting elements and grooves,wherein said water jet cutting elements have the capability to moving.

The present invention is explained using the appended figures, wherein
Fig. 1 shows a general view of one of the turbines known in the art.
Fig. 2 shows a general view of the dual propeller turbine accordingto the present invention.
Figures 3a and 3b show cross-sections of the input and output segments of the device accordingto the present invention.
Fig. 4 shows a reducing nozzle with a groove and a jet cutting element of the device accordingto the present invention.
Fig. 5 shows the axial section of blade of the device accordingto the present invention.
Fig. 6 shows spiral blades of the turbine accordingto the present invention.

### Detailed description

In order to increase the efficiency, the present invention suggests combining two turbines on one common shaft with the same direction of rotation, but with a different direction of the flux entering the turbine (axial component). As a result, the axial forces acting on the turbine compensate each other and the load on the axial bearingis relieved. Therefore, it is possible to use conical roller bearings instead of an axial bearing.

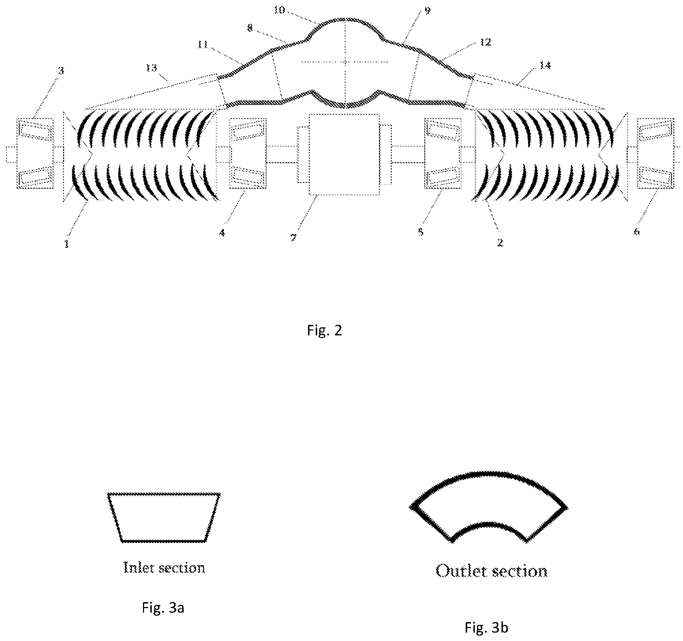

Referring to fig. 2 the general view of the turbine according to the present invention is shown. It consists of two turbines 1 and 2. Their blades form a spiral shape. In these two turbines, the direction of inflow of jets 1 and 2 and the axial forces generated on the blades are opposite to each other. Roller bearings 3, 4, 5 and 6 are mounted on both sides of each turbine 1, 2, and a generator 7 is installed between the turbines. In this way, two propeller turbines with opposite axial forces acting on each of them are created, which are rigidly connected to the generator shaft from the opposite sides.

The device also includes two water flow converter feedings 8 and 9, which are connected to a common upstream pipeline 10, two adjustable semi-circular reducing nozzles 11 and 12, which have grooves in which the jet's cutting elements move (not shown in the figure), and two receiving and distributing chambers 13 and 14 disposed in front of the turbines. Referring to fig. 3a the trapezoidal cross-section of the inlet of the above-mentioned feeding is shown, which is gradually transformed and a semicircular conical cross-section is assumed at the outlet (see fig. 3b).

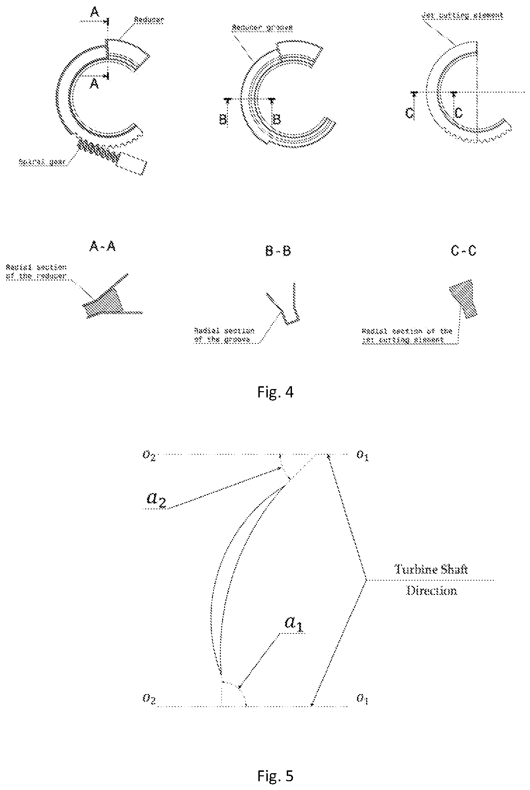

Fig. 4 shows a reducing nozzle with a groove and a jet cutting element.

The jet entering the turbine is formed in an adjustable semicircular conical reducing nozzle. The jet produced has both an axial and a radial components of velocityat all points, which in the receiving and distributing chamber (see fig. 2) is partly converted into the tangential one. Adjustment of jet discharge is carried out by tangential (along the circle) narrowing of the jet when entering the reducing nozzleof a special semi-circular jet cutting element. This element has the capability to moving in a semi-circular groove with a converging cut-out. The movement can be performed, for example, using an electric motor with a spiral gear, etc.

Thus, the structure of the turbine accordingto the present invention is similar to the prior art turbine structure described above, which is shown in fig. 1, with the difference in that it contains two propeller turbines connected along the axis by a common shaft, and the water jet in them has different directions, as a result of which the axial forces generated in them compensate each other. Moreover, the feedings have such a shape that the cross-section of the incoming water changes from trapezoidal to semicircular-conical with an equal radial component of the velocity depending on the angle of entry into the turbine (see fig. 5, which shows the axial cross-section of the turbine blade).

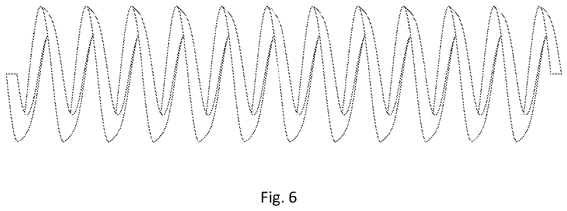

The spiral blades of the turbine are formed by the rotation of the axial cross-section (see fig. 5) and at the same time by the axial offset, resulting in the spiral shape shown in fig. 6. At the same time, during the rotation of the blades of turbines 1 and 2, their axial offsets are opposite to each other. Therefore, the directions of the jets entering the turbines and the axial forces generated on the corresponding blades are opposite to each other. For this purpose, the spiral blades of turbines 1 and 2 are of the same structure and are disposed on the shafts in such a manner that one spiral blade is turned at the angle of 180 degrees with respect to the other one.

With the above-described construction, the water jet passes obliquely to the axis throughout the turbine. Impacting on the surfaces of the spiral blades, the water jettransfers its own energy to them and sets the turbine into motion. Water flows out of the turbine perpendicular to the axis, with no axial component of velocity. At the predetermined speed of the jet, the number of revolutions of the turbine per unit of time is quite large, which allows connecting the turbine to the generator without a reduction gearbox. In addition, the construction does not require the use of anaxial bearing, thereby reducing power losses. It is practically possible to double the power without increasing the diameter of the turbines, while maintaining a high number of revolutions. The turbine can work under both low and high pressure conditions. The small diameter allows it to be installed at the tail water leveland can be partially immersed in the water, which minimizes the pressure loss in front of the nozzle.

## Claims

1. A propeller turbine comprising basic spiral blades, two basic co-axial shafts on which said basic spiral blades are mounted, a basic water jet receiving and distributing chamber (13), and
a basic adjustable reducing nozzle (11) for generating the jet, **characterized in that**
it further comprises additional spiral blades and two additional co-axial shafts on which said additional spiral blades are mounted, wherein the basic and additional spiral blades are arranged along a common axis; an additional water jet receiving and distributing chamber (14), and an additional adjustable reducing nozzle (12) for generating a water jet, a common upstream pipeline (10) and two water flow converter feedings (8, 9) connected to it at one end, the other ends of which are connected to said basic and additional adjustable reducing nozzles (11, 12) for generating water jet; wherein the basic and additional spiral blades are of the same structure and arranged on the shafts such that they are opposed to each other at an angle of 180 degrees; wherein the basic two coaxial shafts and the additional two coaxial shafts are arranged coaxially and the basic water jet receiving and distributing chamber (13), the basic adjustable reducing nozzle for generating the jet, the additional water jet receiving and distributing chamber (14), and the additional adjustable reducing nozzle for generating the jet are disposed so that the axial forces generated by the water jets on the basic and additional spiral blades are opposite to each other.

2. The propeller turbine according to claim 1, **characterized in that** said basic and additional adjustable reducing nozzles (11, 12) have a semicircular shape and are provided with water jet cutting elements and grooves, in which said water jet cutting elements have the capability of moving.

## Patentansprüche

1. Eine Propellerturbine, die Folgendes umfasst: Basis-Spiralblätter, zwei koaxiale Basiswellen, an denen die Basis-Spiralblätter montiert sind, eine Basis-Wasserstrahl-Aufnahme- und Verteilkammer (13) und eine einstellbare Basis-Reduzierdüse (11) zur Erzeugung des Strahls;
**dadurch gekennzeichnet, dass**
sie weiter Folgendes umfasst: zusätzliche Spiralblätter und zwei zusätzliche koaxiale Wellen, an denen die zusätzlichen Spiralblätter montiert sind, wobei die Basis-Spiralblätter und die zusätzlichen Spiralblätter entlang einer gemeinsamen Achse angeordnet sind; eine zusätzliche Wasserstrahl-Aufnahme- und Verteilkammer (14) und eine zusätzliche einstellbare Reduzierdüse (12) zur Erzeugung eines Wasserstrahls, eine gemeinsame stromaufwärts gelegene Rohrleitung (10) und zwei Wasser-Strömungswandler-Zuführungen (8, 9), die an einem Ende mit ihr verbunden sind, dessen andere Enden mit der Basis- und der zusätzlichen einstellbaren Reduzierdüse (11, 12) zur Erzeugung des Wasserstrahls verbunden sind; wobei die Basis-Spiralblätter und die zusätzlichen Spiralblätter dieselbe Struktur haben und so an den Wellen angeordnet sind, dass sie einander in einem Winkel von 180° gegenüberliegen; wobei die zwei koaxialen Basiswellen und die zwei zusätzlichen koaxialen Wellen koaxial angeordnet sind und die Basis-Wasserstrahl-Aufnahme- und Verteilkammer (13), die einstellbare Basis-Reduzierdüse zur Erzeugung des Strahls, die zusätzliche Wasserstrahl-Aufnahme- und Verteilkammer (14) und die zusätzliche einstellbare Reduzierdüse zur Erzeugung des Strahls so angeordnet sind, dass die axialen Kräfte, die von den Wasserstrahlen an den Basis-Spiralblättern und den zusätzlichen Spiralblättern erzeugt werden, einander entgegengesetzt sind.

2. Die Propellerturbine gemäß Anspruch 1, **dadurch gekennzeichnet, dass** die Basis-Reduzierdüse und die zusätzliche einstellbare Reduzierdüse (11, 12) eine Halbkreisform haben und mit Wasserstrahl-Schneidelementen und Nuten versehen sind, worin die Wasserstrahl-Schneidelemente die Fähigkeit haben, sich zu bewegen.

## Revendications

1. Turbine à hélice comprenant des pales hélicoïdales de base, deux arbres coaxiaux de base sur lesquels sont montées lesdites pales hélicoïdales de base, une chambre de réception et de distribution de jet d'eau de base (13) et
une buse de réduction réglable de base (11) pour générer le jet, **caractérisée en ce qu'**elle
comprend en outre des pales hélicoïdales supplémentaires et deux arbres coaxiaux supplémentaires sur lesquels lesdites pales hélicoïdales supplémentaires sont montées, où les pales hélicoïdales de base et supplémentaires étant disposées le long d'un axe commun ; une chambre supplémentaire de réception et de distribution du jet d'eau (14) et une buse de réduction réglable supplémentaire (12) pour générer un jet d'eau,
une conduite amont commune (10) et deux alimentations de convertisseur de débit d'eau (8, 9)
qui y sont raccordées à une extrémité, dont les
autres extrémités sont raccordées auxdites buses de réduction de base et supplémentaires réglables (11, 12)
pour générer un jet d'eau ; où les pales hélicoïdales de base et supplémentaires ont la même structure et sont disposées sur les arbres de manière à être opposées les unes aux autres à un angle de 180 degrés ; où les deux arbres coaxiaux de base et les deux arbres coaxiaux supplémentaires sont disposés coaxialement et la chambre de réception et de distribution de jet d'eau de base (13),
la buse de réduction réglable de base pour générer le jet, la chambre supplémentaire de réception et de distribution du jet d'eau (14),
et la buse de réduction réglable supplémentaire pour générer le jet sont disposées de telle sorte que les forces axiales générées par les jets d'eau sur les pales hélicoïdales de base et supplémentaires soient opposées les unes aux autres.

2. Turbine à hélice selon la revendication 1, **caractérisée en ce que** lesdites buses de réduction réglables de base et supplémentaires (11, 12)
ont une forme semi-circulaire et sont pourvues d'éléments de coupe à jet d'eau et de rainures, dans lesquelles lesdits éléments de coupe à jet d'eau ont la capacité de se déplacer.
